# EUROPEAN PATENT SPECIFICATION

(11) **EP 3 501 876 B1**
(45) Date of publication and mention of the grant of the patent: **10.11.2021**
(21) Application number: 17208746.2
(22) Date of filing: 20.12.2017
(51) Int. Cl.: B60L 3/04, B60L 58/20, H02M 1/32, H02M 7/797, H02P 3/22, H02M 1/00

(54) **CONTROL UNIT, INVERTER, ASSEMBLY, VEHICLE AND METHOD FOR CONTROLLING AN INVERTER**
STEUERUNGSEINHEIT, WECHSELRICHTER, ANORDNUNG, FAHRZEUG UND VERFAHREN ZUR STEUERUNG EINES WECHSELRICHTERS
UNITÉ DE COMMANDE, ONDULEUR, ENSEMBLE, VÉHICULE ET PROCÉDÉ DE COMMANDE D'UN ONDULEUR

(43) Date of publication of application: 26.06.2019
(73) Proprietor: Valeo Siemens eAutomotive Germany GmbH, 91056 Erlangen (DE)
(72) Inventor: WIEDMANN, Karsten, 91080 Spardorf (DE)
(74) Representative: Dr. Gassner & Partner mbB

(56) References cited:
- EP-A1- 2 683 071
- DE-A1-102006 003 254

## Description

The present invention relates to a control unit for controlling an inverter with a DC link capacitor, with a plurality of output phases and with a plurality of switching elements being arranged in half bridges and being connected to the DC link capacitor and the output phases, wherein in a failure mode the control unit is configured to control the switching elements to adopt an active short circuit state, in which the output phases are short-circuited. Besides, the invention relates to an inverter, an assembly, a vehicle and method for controlling an inverter.

Inverters are widely known to convert a DC voltage provided to a DC link into an AC output current supplying stator windings of an electric machine. The inverter comprises a control unit configured to control switching elements of the inverter such that the AC output current is generated in a normal operation mode. Due to a failure, the control unit is switched into a failure mode, in which switching elements connected to a potential of the DC link are turned off and switching elements connected to another potential of the DC link are turned on, thereby shortening the stator windings. Such a switching configuration is commonly named active short circuit. However, most voltage-controlled semiconductor switching elements have a normally-off characteristic. Thus, in the case of losing a power supply of the control all switching elements are turned off permanently. It is known to use a DC link capacitor to supply the control unit, when losing the power supply. When the smoothing capacitor is discharged to or below a predefined threshold value, energy may be recovered from the electric machine in order to recharge the smoothing capacitor.

EP 2 683 071 A1 discloses an inverter having an IGBT module including a plurality of IGBTs serving as switching elements and a smoothing capacitor. The IGBT module comprises three serial circuits of IGBTs connecting an upper arm and a lower arm of a high voltage power source. Upon detecting a low level of a signal a three-phase short controlling signal is provided that triggers a three-phase short signal. The three-phase short signal becomes a high level causing all of the IGBTs of the lower arm to be turned on and all IGBTs of the upper arm to be turned off. Upon detecting that a power source voltage is below an OFF threshold value by means of a high-voltage dividing circuit the three-phase short signal becomes a low level causing the IGBTs connected to the lower arm to be tuned off. Upon detecting that the power source voltage has reached an ON threshold value the three-phase short signal becomes a high level causing the IGBTs connected to the lower arm are controlled to be turned on again.

EP 2 433 830 A1 discloses a controller for a multiphase inverter, comprising upper switches and lower switches and a smoothing capacitor, which is arranged in a DC link, and being connected to a three-phase synchronous machine for driving a vehicle. The controller is configured to control the inverter such that electric energy from the synchronous machine is recovered during a safe state caused by an active short circuit due to closing all upper switches or all lower switches. Therein, the synchronous machine is operated in a passive generator operation by opening all switches of the inverter, wherein the smoothing capacitor is charged up to a first threshold value of a DC link voltage. Electric loads of the vehicle are supplied by electric energy of the smoothing capacitor. Above a higher second threshold value windings of the synchronous machine are short-circuited by closing all lower switches or all upper switches by the voltage of the DC link automatically. After undercutting the first threshold value the active short circuit is released by opening the closed switches automatically.

However, when recharging the DC link capacitor is triggered although the DC link capacitor is still connected to a DC voltage source, e.g. a battery of a vehicle, an undesired braking torque may occur. This may be caused by different safety functions such as one function for detecting a failure by the inverter and another function realized independently of the inverter for disconnecting the DC voltage source from the DC link. Thus, an interference of these functions may cause the braking torque.

Thus, it is an object of the invention to provide an improved control unit, particularly allowing a robust operation.

According to the present invention, the above object is solved by a control unit according to claim 1 and by a method according to claim 12.

The invention is based on the consideration that by means of supervising the current flowing between the input and the switching elements an undesired braking torque can be avoided, since the braking torque results from the current being negative with an absolute value above the current threshold. Thus, the control unit maintains or adopts the active short circuit state, if second condition is not fulfilled although a fulfillment of the first condition indicates a need of recharging the DC link capacitor. Advantageously, the inventive control unit allows a more robust operation of the inverter with respect to functional safety requirements as undesired breaking torques are avoided when recharging the DC link capacitor.

Preferably, the voltage threshold is chosen such that it allows supplying a DC conversion unit connected in parallel to the DC link capacitor and being configured to supply the control unit. Preferably, the voltage threshold has a value between 30 V and 100 V. The current threshold is preferably chosen depending on the size of the electric machine and/or a tolerable braking torque. The current threshold may have a value between -30 A and -5 A, preferably between -20 A and -10 A.

Furthermore, the control unit may be configured to control the switching elements to be transferred from the freewheeling state into the active short circuit state, if a third condition, according to which the voltage measuring signal is indicative that the voltage between the positive potential and the negative potential is above or equal to a predefined second voltage threshold. Therein, the second voltage threshold may represent a voltage level, at which the DC link capacitor is charged sufficiently.

Particularly, the control unit is configured to actively short-circuit the output phases by controlling either the switching element being connected to the positive potential of each half bridge to be turned off and by controlling the switching element being connected to the negative potential of each half bridge to be turned on or by controlling the switching element being connected to the positive potential of each half bridge to be turned on and by controlling the switching element being connected to the negative potential of each half bridge to be turned off.

Preferably, the control unit is configured to control all switching elements of another or the other half bridges to be turned off in the freewheeling state. Thus, a complete freewheeling state, also called "Safe Pulse Off (SPO), may be used for charging the DC link capacitor.

Typically, the control unit is configured to control the switching elements to be transferred from a normal mode, in which pulsing signals for providing a multi-phase AC current at the output phases are provided to the switching signals, into the failure mode, if a failure is detected. A failure signal may be generated by the control unit or may be obtained by a safety unit of the inverter. The safety unit may implement a safety monitoring according to the E-Gas Level 3 standard. In a normal operation mode of the inverter the control unit may be configured to provide pulsing signals such that the switching elements are turned on and off for providing an AC current, wherein the control unit may be configured to inhibit the pulsing signals upon receiving the failure signal.

The switching elements may be voltage-controlled switching elements, particularly comprising power transistors such as insulated gate field-effect transistors or insulated gate bipolar transistors.

Besides, the present invention relates to an inverter, comprising a control unit according to the invention.

Moreover, the present invention relates to an assembly of an electric machine and an inverter according to the invention configured to supply the electric machine.

Furthermore, the present invention relates to a vehicle comprising an assembly according to the invention, wherein the electric machine is configured to drive the vehicle. The assembly may comprise a DC voltage source, e.g. a high-voltage battery, supplying the inverter. The assembly may comprise a switch by a which the DC voltage source is connectable to the inverter.

Finally, the present invention relates to a method for operating an inverter with a DC link capacitor, a plurality of output phases and a plurality of switching elements arranged in half bridges and connected to the DC link capacitor and the output phases, comprising the following steps: Adopting in a failure mode an active short circuit state, in which the output phases are short circuited; Evaluating, whether a first condition, according to which a voltage measuring signal representing a voltage dropping over the DC link capacitor is indicative that the voltage between a positive potential of the DC link capacitor and a negative potential of the DC link capacitor is below a predefined positive voltage threshold, is fulfilled; Evaluating, whether a second condition, according to which a current measuring signal representing a current flowing between an input of the inverter and the switching elements is indicative that the current in a direction from the positive potential to the negative potential is above or equal to a predefined current threshold being below zero, is fulfilled; Transferring the switching elements from the active short circuit state into a freewheeling state, in which the switching elements of one half bridge are turned off, if the first condition and the second condition are fulfilled, or maintaining or adopting the active short circuit state, if the first condition is fulfilled and the second condition is not fulfilled.

All statements referring to the inventive inverter apply analogously to the inventive electric machine, the inventive assembly, the inventive vehicle and the inventive method, so that the above-mentioned advantages of the inventive inverter may be achieved as well.

Further details and advantages of the invention are disclosed in the following, wherein reference is made to the schematic drawings showing:
Fig. 1 a block diagram of an assembly of an inverter and an electric machine; and
Fig. 2 a block diagram of an embodiment of a vehicle.

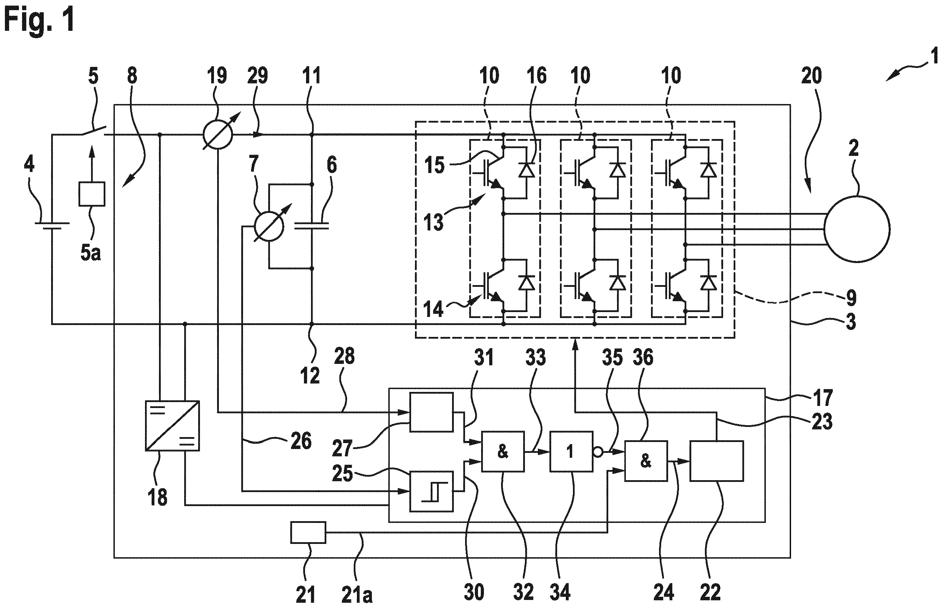

Fig. 1 is a block diagram of an assembly 1 of an electric machine 2, an inverter 3 and a DC voltage source 4 being connected to the inverter 3 via a switch 5. The switch is controllable by an electric control unit (ECU) 5a being part of the assembly 1.

The inverter 3 comprises a DC link capacitor 6 for smoothing a voltage supplied by the DC voltage source 4 connected to an input 8 of the inverter 3. In parallel to the DC link capacitor 6 a voltage measurement unit 7 is connected. Furthermore, the inverter 3 comprises a power unit 9, comprising three half bridges 10 being connected in parallel between a positive potential 11 of the DC link capacitor 6 and a negative potential 12 of the DC link capacitor 6. Each half bridge 10 comprises a switching element 13 being connected to the positive potential 11 and a switching element 14 connected to negative low potential 12. Each switching element 13, 14 comprises a power transistor 15, e.g. an insulated gate field-effect transistor or an insulated gate bipolar transistor, and a diode 16 connected in parallel thereto. In the case of the transistor 15 being an insulated gate field-effect transistor, the diode 16 is formed by a body diode of the transistor 15.

Furthermore, the inverter 3 comprises a control unit 17 and a DC conversion unit 18. The DC conversion unit 18 comprises a flyback converter and is configured to convert a voltage dropping over the DC link capacitor 6 into a supply voltage for the control unit 17. Therein, the supply voltage is used in the case where an external low-voltage power supply (not shown) for the control unit 17, e.g. a low-voltage battery, does not provide sufficient power. With respect to automotive applications, this may occur due to a loss of a corresponding terminal (e.g. "Klemme 30" according to DIN 72552).

Finally, the inverter 3 comprises a current measurement unit 19 interconnected at the positive potential 11 between the input 8 and the DC link capacitor 6. Alternatively, the current measurement unit 19 is connected between the DC link capacitor 6 and the half bridges 10.

In a normal operation mode, the control unit 17 is configured to provide pulsing signals for providing a multiphase AC current at output phases 20 of the inverter 6. If a safety unit 21 of the inverter 3, e.g. implementing the E-Gas Level 3 standard, detects a failure, a failure signal 21a is provided Therein, the failure detection function of the safety unit 21 is independent of an external failure detection function, e.g. realized by the electric control unit 5a, which triggers the switch 5 to open therein disconnecting the DC voltage source 4 from the inverter 3.

The control unit 17 comprises a logic section 22 which is configured to provide a control signal 23 to the switching elements 14, 15 such that they are transferred either into an active short circuit state or into a freewheeling state. Therein, if an input signal 24 of the logic section 22 is a logic one, the active short circuit state is adopted, and if the input signal 24 of the logic section 22 is a logic zero, the freewheeling state is adopted. In the active short circuit state, the switching element 13 being connected to the positive potential 11 of each half bridge 10 is controlled to be turned off and the switching element 14 being connected to the negative potential 12 of each half bridge 10 is controlled to be turned on. Alternatively, the switching element 13 of each half bridge 10 is controlled to be turned on and the switching element 14 of each half bridge 10 is controlled to be turned off. In the freewheeling state, both switching elements 14, 15 of one, two or all half bridges 10 are turned off. Thus, the diodes 16 work as a rectifier for a recovered electromagnetic force (e. m. f.) provided by the electric machine 2. The control unit 17 comprises a first comparator section 25, which obtains a voltage measuring signal 26 from the voltage detection unit 7. By means of the first comparator section 25 a first condition is implemented, according to which the voltage measuring signal representing the voltage dropping over the DC capacitor 6 is indicative that the voltage between the positive terminal 11 and the negative terminal 12 is below a predefined positive first voltage threshold. Exemplarily, the first voltage threshold has a value of 80 V. Aside, the control unit 17 comprises a second comparator section 27, which obtains a current measuring signal 28 from the current detection unit 19. By means of the second comparator section a second condition is implemented, according to which the current measuring signal 28 representing a current 29 flowing between the input 8 and the switching elements 14, 15 is indicative that the current 29 in a direction from the positive potential 11 to the negative potential 12 is above or equal to a predefined current threshold being below the zero. Exemplarily, the current threshold has a value of - 15 A.

Aside, the first comparator section 25 has a hysteresis function implementing a third condition, according to which the voltage measuring signal 26 is indicative that the voltage between the positive potential 11 and the negative potential 12 is above or reaches a predefined second voltage threshold being higher than the first voltage threshold.

Output signals 30, 31 of the first comparator section 25 or the second comparator section 27, respectively, have a logic one if the respective condition is fulfilled and a logic zero otherwise. The output signals 30, 31 are an input of an AND-gate 32 of the control unit 17. An output 33 of the AND-gate 32 is fed to a NOT-gate 34, whose output 35 and the failure signal 21a are an input of an AND-gate 36 providing the input signal 24 of the logic section 22 as output.

Upon opening the switch 5 by the electric control unit 5a the DC link capacitor 6 is discharged as it is not any longer recharged by the DC voltage source 4. Thus, the DC conversion unit 18 is not able to supply the control unit 17, if the DC link capacitor 6 is completely discharged. However, the control unit 17 is configured to control the switching elements 14, 15 to be transferred from the active short circuit state into the freewheeling state, thereby recharging the DC link capacitor 6 by a rectified back e. m. f. of the electric machine to be supplied via the output phases 20. However, when the safety unit 21 working independently from the electric control unit 5a provides the failure signal 21a although the switch 5 is closed, an undesired braking torque may occur as the current 29 being negative flows. In order to avoid the braking torque in the case of the negative current 29 being too high, the control unit 17 is configured to maintain or adopt the active short circuit state, if the first condition is fulfilled and the second condition is not fulfilled. In other words, if the negative current 29 is below the current threshold, the control unit 17 avoids the freewheeling state. Note that due to the third condition the active short circuit state is adopted again if the second voltage threshold is reached or crossed, therein indicating that the DC link capacitor 6 has been recharged to a sufficient amount of charge.

The control unit 17, particularly the logic section 22 and the gates 32, 34, 36, may be implemented discretely or in a complex programmable logic device (CPLD) or in a field programmable gate array (FPGA). Alternatively, the aforementioned logic functions are implemented in a computer program, particularly running on a microcontroller.

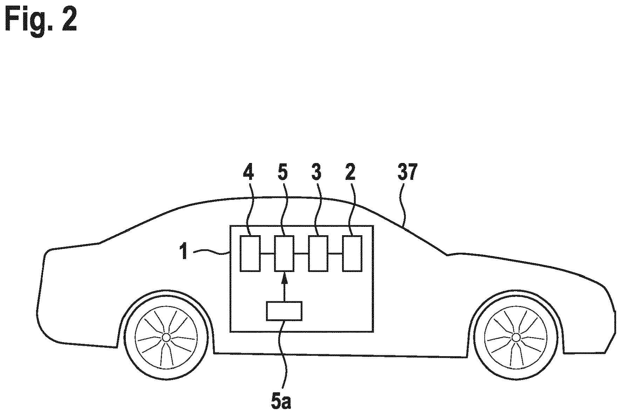

Fig. 2 is a block diagram of an embodiment of a vehicle 37 comprising the assembly 1, wherein the electric machine 2 is configured to drive the vehicle 37.

## Claims

1. Control unit (17) for controlling an inverter (3) with a DC link capacitor (6), with a plurality of output phases (20) and with a plurality of switching elements (13, 14) being arranged in half bridges (10) and being connected to the DC link capacitor (6) and the output phases (20), wherein in a failure mode the control unit (17) is configured to control the switching elements (13, 14) to adopt an active short circuit state, in which the output phases (20) are short-circuited, wherein the control unit is configured to control the switching elements (13, 14)
- to be transferred from the active short circuit state into a freewheeling state, in which the switching elements (13, 14) of one half bridge (10) are turned off, if
- a first condition, according to which a voltage measuring signal (26) representing a voltage dropping over the DC link capacitor (6) is indicative that the voltage between a positive potential (11) of the DC link capacitor and a negative potential (12) of the DC link capacitor (6) is below a predefined positive voltage threshold, and
- a second condition, according to which a current measuring signal (28) representing a current (29) flowing between an input (8) of the inverter (3) and the switching elements (13, 14) is indicative that the current (29) in a direction from the positive potential (11) to the negative potential (12) is above or equal to a predefined current threshold being below zero,
are fulfilled, and
- to maintain and/or adopt the active short circuit state, if the first condition is fulfilled and the second condition is not fulfilled.

2. Control unit according to claim 1, wherein the voltage threshold has a value between 30 V and 100 V.

3. Control unit according to claim 1 or 2, wherein the current threshold has a value between -30 A and -5 A, preferably between -20 A and -10 A.

4. Control unit according to any of the preceding claims, wherein the control unit (17) is configured to control the switching elements (13, 14) to be transferred from the freewheeling state into the active short circuit state, if a third condition, according to which the voltage measuring signal (28) is indicative that the voltage between the positive potential (11) and the negative potential (12) is above or reaches a predefined second voltage threshold.

5. Control unit according to any of the preceding claims, wherein the control unit is configured to actively short-circuit the output phases (20) by controlling either the switching element (13) being connected to the positive potential (11) of each half bridge (10) to be turned off and by controlling the switching element (14) being connected to the negative potential (12) of each half bridge (10) to be turned on or by controlling the switching element (13) being connected to the positive potential (11) of each half bridge (10) to be turned on and by controlling the switching element (14) being connected to the negative potential (12) of each half bridge (10) to be turned off.

6. Control unit according to any of the preceding claims, wherein the control unit is configured to control all switching elements (13, 14) of another or the other half bridges to be turned off in the freewheeling state.

7. Control unit according to any of the preceding claims, wherein the control unit (17) is configured to control the switching elements (13, 14) to be transferred from a normal mode, in which pulsing signals for providing a multi-phase AC current at the output phases (20) are provided to the switching elements (13, 14), into the failure mode, if a failure is detected.

8. Control unit according to any of the preceding claims, wherein the switching elements (13, 14) are voltage-controlled switching elements, particularly comprising power transistors (15).

9. Inverter (3), comprising a control unit (17) according to any of claim 1 to 8.

10. Assembly (1) comprising an electric (2) machine and an inverter (3) according to claim 9 configured to supply the electric machine (2).

11. Vehicle (37), comprising an assembly (1) according to claim 10, wherein the electric machine (2) is configured to drive the vehicle (37).

12. Method for operating an inverter (3) with a DC link capacitor (6), a plurality of output phases (20) and a plurality of switching elements (13, 14) arranged in half bridges (10) and connected to the DC link capacitor (6) and the output phases (20), comprising the following steps:
- Adopting in a failure mode an active short circuit state, in which the output phases (20) are short circuited;
- Evaluating, whether a first condition, according to which a voltage measuring signal (26) representing a voltage dropping over the DC link capacitor (6) is indicative that the voltage between a positive potential (11) of the DC link capacitor (6) and a negative potential (12) of the DC link capacitor (6) is below a predefined positive voltage threshold, is fulfilled;
- Evaluating, whether a second condition, according to which a current measuring signal (28) representing a current (29) flowing between an input (8) of the inverter (3) and the switching elements (13, 14) is indicative that the current (29) in a direction from the positive (11) potential to the negative potential (12) is above or equal to a predefined current threshold being below zero, is fulfilled;
- Transferring the switching elements (13, 14) from the active short circuit state into a freewheeling state, in which the switching elements (13, 14) of one half bridge (10) are turned off, if the first condition and the second condition are fulfilled, or maintaining or adopting the active short circuit state, if the first condition is fulfilled and the second condition is not fulfilled.

## Patentansprüche

1. Steuerungseinheit (17) zur Steuerung eines Wechselrichters (3) mit einem Zwischenkreiskondensator (6), mit einer Mehrzahl von Ausgangsphasen (20) und mit einer Mehrzahl von Schaltelementen (13, 14), die in Halbbrücken (10) angeordnet und mit dem Zwischenkreiskondensator (6) und den Ausgangsphasen (20) verbunden sind, wobei die Steuerungseinheit (17) dazu ausgebildet ist, in einem Ausfallmodus die Schaltelemente (13, 14) anzusteuern, um einen aktiven Kurzschlusszustand einzunehmen, in dem die Ausgangsphasen (20) kurzgeschlossen sind, wobei die Steuerungseinheit dazu ausgebildet ist, die Schaltelemente (13, 14)
- aus dem aktiven Kurzschlusszustand in einen Freilaufzustand zu überführen, in dem die Schaltelemente (13, 14) der einen Halbbrücke (10) ausgeschaltet sind, falls
- eine erste Bedingung, gemäß der ein Spannungsmesssignal (26), das eine über den Zwischenkreiskondensator (6) abfallende Spannung darstellt, anzeigt, dass die Spannung zwischen einem positiven Potential (11) des Zwischenkreiskondensators und einem negativen Potential (12) des Zwischenkreiskondensators (6) unter einem vordefinierten positiven Spannungsschwellenwert liegt, und
- eine zweite Bedingung, gemäß der ein Strommesssignal (28), das einen Strom (29) darstellt, der zwischen einem Eingang (8) des Wechselrichters (3) und den Schaltelementen (13, 14) fließt, anzeigt, dass der Strom (29) in einer Richtung von dem positiven Potential (11) zu dem negativen Potential (12) über oder gleich einem vordefinierten Stromschwellenwert ist, der unter Null liegt,
erfüllt sind, und
- den aktiven Kurzschlusszustand beizubehalten und/oder einzunehmen, falls die erste Bedingung erfüllt und die zweite Bedingung nicht erfüllt ist.

2. Steuerungseinheit nach Anspruch 1, wobei der Spannungsschwellenwert einen Wert zwischen 30 V und 100 V hat.

3. Steuerungseinheit nach Anspruch 1 oder 2, wobei der Stromschwellenwert einen Wert zwischen -30 A und -5 A, vorzugsweise zwischen -20 A und -10 A, aufweist.

4. Steuerungseinheit nach einem der vorhergehenden Ansprüche, wobei die Steuerungseinheit (17) so konfiguriert ist, dass sie die Schaltelemente (13, 14) so ansteuert, dass sie aus dem Freilaufzustand in den aktiven Kurzschlusszustand überführt werden, wenn eine dritte Bedingung, gemäß der das Spannungsmesssignal (28) anzeigt, dass die Spannung zwischen dem positiven Potential (11) und dem negativen Potential (12) über einem vordefinierten zweiten Spannungsschwellenwert liegt oder diese erreicht.

5. Steuerungseinheit nach einem der vorhergehenden Ansprüche, wobei die Steuerungseinheit zum aktiven Kurzschließen der Ausgangsphasen (20) konfiguriert ist, indem sie entweder das Schaltelement (13) steuert, das mit dem positiven Potential (11) jeder auszuschaltenden Halbbrücke (10) verbunden ist, und das Schaltelement (14) steuert, das mit dem negativen Potential (12) jeder einzuschaltenden Halbbrücke (10) verbunden ist, oder indem sie das Schaltelement (13) steuert, das mit dem positiven Potential (11) jeder einzuschaltenden Halbbrücke (10) verbunden ist, und das Schaltelement (14) steuert, das mit dem negativen Potential (12) jeder auszuschaltenden Halbbrücke (10) verbunden ist.

6. Steuerungseinheit nach einem der vorhergehenden Ansprüche, wobei die Steuerungseinheit so konfiguriert ist, dass sie alle Schaltelemente (13, 14) der einen oder anderen Halbbrücke so ansteuert, dass sie im Freilaufzustand ausgeschaltet werden.

7. Steuerungseinheit nach einem der vorhergehenden Ansprüche, wobei die Steuerungseinheit (17) dazu konfiguriert ist, die Schaltelemente (13, 14) so zu steuern, dass sie von einem Normalmodus, in dem pulsierende Signale zum Bereitstellen eines mehrphasigen Wechselstroms an den Ausgangsphasen (20) an die Schaltelemente (13, 14) geliefert werden, in den Fehlermodus übergehen, wenn ein Fehler erkannt wird.

8. Steuerungseinheit nach einem der vorhergehenden Ansprüche, wobei die Schaltelemente (13, 14) spannungsgesteuerte Schaltelemente sind, insbesondere mit Leistungstransistoren (15).

9. Wechselrichter (3), umfassend eine Steuerungseinheit (17) nach einem der Ansprüche 1 bis 8.

10. Baugruppe (1) mit einer elektrischen Maschine (2) und einem Wechselrichter (3) nach Anspruch 9, der zur Versorgung der elektrischen Maschine (2) konfiguriert ist.

11. Fahrzeug (37), umfassend eine Baugruppe (1) nach Anspruch 10, wobei die elektrische Maschine (2) zum Antrieb des Fahrzeugs (37) ausgebildet ist.

12. Verfahren zum Betreiben eines Wechselrichters (3) mit einem Zwischenkreiskondensator (6), mehreren Ausgangsphasen (20) und mehreren in Halbbrücken (10) angeordneten Schaltelementen (13, 14), die mit dem Zwischenkreiskondensator (6) und den Ausgangsphasen (20) verbunden sind, mit den folgenden Schritten:
- Einnehmen eines aktiven Kurzschlusszustands in einem Fehlermodus, in dem die Ausgangsphasen (20) kurzgeschlossen sind;
- Auswerten, ob eine erste Bedingung erfüllt ist, nach der ein Spannungsmesssignal (26), das eine über den Zwischenkreiskondensator (6) abfallende Spannung repräsentiert, anzeigt, dass die Spannung zwischen einem positiven Potential (11) des Zwischenkreiskondensators (6) und einem negativen Potential (12) des Zwischenkreiskondensators (6) unterhalb eines vordefinierten positiven Spannungsschwellenwerts liegt;
- Auswerten, ob eine zweite Bedingung erfüllt ist, nach der ein Strommesssignal (28), das einen zwischen einem Eingang (8) des Wechselrichters (3) und den Schaltelementen (13, 14) fließenden Strom (29) repräsentiert, anzeigt, dass der Strom (29) in einer Richtung vom positiven (11) Potential zum negativen Potential (12) über oder gleich einer vordefinierten Stromschwelle ist, die unter Null liegt;
- Überführen der Schaltelemente (13, 14) aus dem aktiven Kurzschlusszustand in einen Freilaufzustand, in dem die Schaltelemente (13, 14) einer Halbbrücke (10) ausgeschaltet sind, wenn die erste Bedingung und die zweite Bedingung erfüllt sind, oder Beibehalten oder Einnehmen des aktiven Kurzschlusszustandes, wenn die erste Bedingung erfüllt und die zweite Bedingung nicht erfüllt ist.

## Revendications

1. Unité de commande (17) destinée à commander un onduleur (3) avec un condensateur de liaison CC (6), avec une pluralité de phases de sortie (20) et avec une pluralité d'éléments de commutation (13, 14) qui est disposée dans des demi-ponts (10) et connectée au condensateur de liaison CC (6) et aux phases de sortie (20) en ce que, dans un mode de défaillance, l'unité de commande (17) est configurée pour commander les éléments de commutation (13, 14) pour adopter un état de court-circuit actif dans lequel les phases de sortie (20) sont court-circuitées, en ce que l'unité de commande est configurée pour commander les éléments de commutation (13, 14)
- pour être transférés de l'état de court-circuit actif à un état de roue libre dans lequel les éléments de commutation (13, 14) d'un demi-pont (10) sont désactivés, si
- une première condition, selon laquelle un signal de mesure de tension (26) représentant une chute de tension sur le condensateur de liaison CC (6) indique que la tension entre un potentiel positif (11) du condensateur de liaison CC et un potentiel négatif (12) du condensateur de liaison CC (6) est inférieure à un seuil de tension positive prédéfini, et
- une deuxième condition, selon laquelle un signal de mesure de courant (28) représentant un courant (29) circulant entre une entrée (8) de l'onduleur (3) et les éléments de commutation (13, 14) indique que le courant (29) dans une direction allant du potentiel positif (11) au potentiel négatif (12) est supérieur ou égal à un seuil de courant prédéfini qui est inférieur à zéro,
sont remplies, et
- pour maintenir et/ou adopter l'état de court-circuit actif, si la première condition est satisfaite et que la deuxième condition n'est pas satisfaite.

2. Unité de commande selon la revendication 1, en ce que le seuil de tension a une valeur comprise entre 30 V et 100 V.

3. Unité de commande selon la revendication 1 ou 2, en ce que le seuil de courant a une valeur comprise entre -30 A et -5 A, de préférence entre -20 A et - 10 A.

4. Unité de commande selon l'une des revendications précédentes, en ce que l'unité de commande (17) est configurée pour commander les éléments de commutation (13, 14) pour être transférés de l'état de roue libre à l'état de court-circuit actif si une troisième condition, selon laquelle le signal de mesure de tension (28) indique que la tension entre le potentiel positif (11) et le potentiel négatif (12) est supérieure ou atteint un second seuil de tension prédéfini.

5. Unité de commande selon l'une des revendications précédentes, en ce que l'unité de commande est configurée pour court-circuiter activement les phases de sortie (20) en commandant soit l'élément de commutation (13) connecté au potentiel positif (11) de chaque demi-pont (10) d'être désactivé et en commandant l'élément de commutation (14) connecté au potentiel négatif (12) de chaque demi-pont (10) d'être activé ou en commandant l'élément de commutation (13) connecté au potentiel positif (11) de chaque demi-pont (10) d'être activé et en commandant l'élément de commutation (14) connecté au potentiel négatif (12) de chaque demi-pont (10) d'être désactivé.

6. Unité de commande selon l'une des revendications précédentes, en ce que l'unité de commande est configurée pour commander la mise hors circuit de tous les éléments de commutation (13, 14) d'un autre ou des autres demi-ponts à l'état de roue libre.

7. Unité de commande selon l'une des revendications précédentes, en ce que l'unité de commande (17) est configurée pour commander le transfert des éléments de commutation (13, 14) d'un mode normal, dans lequel des signaux d'impulsion permettant de fournir un courant CA multiphasé aux phases de sortie (20) sont fournis aux éléments de commutation (13, 14), en mode de défaillance, si une défaillance est détectée.

8. Unité de commande selon l'une des revendications précédentes, en ce que les éléments de commutation (13, 14) sont des éléments de commutation commandés en tension, en particulier comprenant des transistors de puissance (15).

9. Onduleur (3), comprenant une unité de commande (17) selon l'une des revendications 1 à 8.

10. Ensemble (1) comprenant une machine électrique (2) et un onduleur (3) selon la revendication 9 configuré pour alimenter la machine électrique (2).

11. Véhicule (37), comprenant un ensemble (1) selon la revendication 10, en ce que la machine électrique (2) est configurée pour entraîner le véhicule (37).

12. Procédé de fonctionnement d'un onduleur (3) avec un condensateur de liaison CC (6), une pluralité de phases de sortie (20) et une pluralité d'éléments de commutation (13, 14) disposés dans des demi-ponts (10) et connectés au condensateur de liaison CC (6) et aux phases de sortie (20), comprenant les étapes suivantes consistant à :
- adopter dans un mode de défaillance un état de court-circuit actif dans lequel les phases de sortie (20) sont court-circuitées ;
- évaluer si une première condition, selon laquelle un signal de mesure de tension (26) représentant une chute de tension sur le condensateur de liaison CC (6) indique que la tension entre un potentiel positif (11) du condensateur de liaison CC (6) et un potentiel négatif (12) du condensateur de liaison CC (6) est inférieure à un seuil de tension positive prédéfini, est remplie ;
- évaluer si une deuxième condition, selon laquelle un signal de mesure de courant (28) représentant un courant (29) circulant entre une entrée (8) de l'onduleur (3) et les éléments de commutation (13, 14) indique que le courant (29) dans une direction allant du potentiel positif (11) au potentiel négatif (12) est supérieur ou égal à un seuil de courant prédéfini qui est inférieur à zéro, est remplie ;
- transférer les éléments de commutation (13, 14) de l'état de court-circuit actif à un état de roue libre, dans lequel les éléments de commutation (13, 14) d'un demi-pont (10) sont désactivés, si la première condition et la deuxième condition sont remplies, ou maintenir ou adopter l'état de court-circuit actif si la première condition est satisfaite et que la deuxième condition n'est pas satisfaite.
